# FASCICULE DE BREVET EUROPEEN

(11) **EP 0 451 592 B1**
(45) Date de publication et mention de la délivrance du brevet: **03.08.1994**
(21) Numéro de dépôt: 91104655.5
(22) Date de dépôt: 25.03.1991
(51) Int. Cl.: B65H 3/32, B65G 59/02

(54) **Procédé et machine de formation de paquets à partir du haut d'une pile de feuilles dans une installation de production d'emballages**
Verfahren und Vorrichtung zum Bilden von Stapeln von der Oberseite eines Stapels von Blättern in einer Maschine zur Herstellung von Verpackungen
Process and device for forming stacks from the top of a pile of sheets in a machine for the production of packages

(30) Priorité: 10.04.1990 CH 1219/90
(43) Date de publication de la demande: 16.10.1991
(73) Titulaire: BOBST S.A., CH-1001 Lausanne (CH)
(72) Inventeur: André, Claude, CH-1032 Romanel (CH); Cachin, Jean-Luc, CH-1023 Crissier (CH)
(74) Mandataire: Colomb, Claude

(56) Documents cités:
- DE-A- 2 533 533
- DE-A- 2 735 721
- DE-A- 3 419 056
- DE-B- 1 013 156
- FR-A- 2 008 614
- FR-A- 2 318 089
- FR-A- 2 381 701
- GB-A- 2 092 116
- US-A- 4 620 827
- PATENT ABSTRACTS OF JAPAN vol. 7, no. 287 (M-264)(1432) 21 Décembre 1983 & JP-A-58 162 447 (NIPPON DENSO K.K. ) 27 Septembre 1983

## Description

La présente invention concerne une machine de formation de paquets à partir du haut d'une pile d'éléments en plaque ou feuilles.

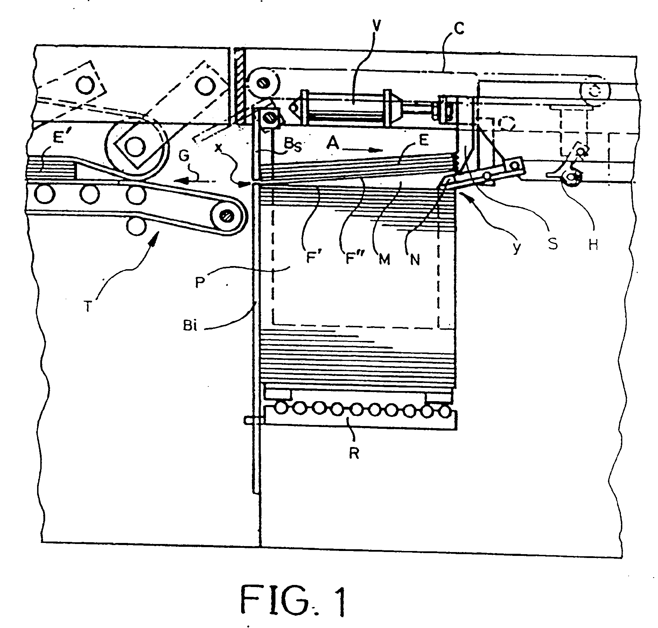

Pour faciliter la compréhension du fonctionnement d'une telle machine connue, il est possible de se référer à la figure 1 du dessin dans laquelle :
- Les dernières feuilles supérieures d'une pile P, destinées à former un paquet E, sont séparées de cette dernière à l'aide d'un séparateur S en prise avec le bord arrière des feuilles du paquet E;
- La pile est maintenue en place du côté avant, c'est-à-dire celui situé dans la direction G de transfert du paquet E, au moyen d'une butée fixe inférieure Bi, empêchant le déplacement, vers l'avant, des feuilles de la pile P, à l'exception d'au moins les deux dernières feuilles supérieures destinées à former le paquet E et maintenues en place par une butée supérieure Bs basculable;
- Après chaque transfert de paquet E, la pile P est déplacée vers le haut, à l'aide d'un monte-pile R, de manière à maintenir constante la position en hauteur de la dernière feuille supérieure de la pile P, et par conséquent aussi la hauteur des dernières feuilles supérieures non maintenues en place par la butée inférieure fixe Bi, ladite hauteur devant être égale à celle du paquet E à former;
- Le séparateur S, en vue de séparer de la pile P le paquet E, est déplacé vers le haut de manière à créer un espace libre M entre la pile P et le paquet E; et
- Après avoir été éloigné du dessus de la pile P par un poussoir H, le paquet E est monté sur un système de transport à courroies T destiné à transférer le paquet E en direction, par exemple, de la station d'introduction d'une machine à travailler les feuilles.

Un tel dispositif est connu, par exemple, de CH-A-639045.

Ce dispositif possède l'inconvénient qu'au cas où le bord avant de la dernière feuille inférieure F˝ du paquet E n'est pas libérée de la butée fixe inférieure Bi à l'instant où, après basculement vers le haut de la butée supérieure Bs, le paquet E est poussé, par le poussoir H, en direction du système de transport T, la feuille F :
- Soit se bombera vers le haut, auquel cas elle détruira l'homogénéité du paquet, homogénéité indispensable pour le transfert qui suit;
- Soit se bombera vers le bas, auquel cas elle exercera une très forte résistance à l'avancement du poussoir H, résistance qui, en plus de la destruction de la feuille, peut perturber gravement le fonctionnement de la machine.

De la figure 1, il est possible de voir la difficulté qu'il y a à choisir un point y de contact du séparateur S avec l'arrière de la pile P qui corresponde exactement avec le point x relatif à la hauteur jusqu'à laquelle la butée inférieure avant Bi empêche les feuilles de la pile P d'être déplacées vers l'avant. En effet, il est très rare, à cause de la déformation des feuilles, principalement de celles situées tout au sommet de la pile P, que la hauteur de cette pile P soit égale sur tout son pourtour. Il est très aisé de voir que cette inégalité sera source de perturbations puisque le séparateur S n'en tient pas compte, c'est-à-dire que le séparateur S peut se trouver dans le cas :
- Soit où il sépare le bord arrière d'une feuille F˝ dont le bord avant n'est pas en prise avec le sommet x de la butée inférieure Bi, auquel cas la feuille F˝ pourra être déplacée, par le poussoir H, en direction du système de transport T;
- Soit où il sépare le bord arrière d'une feuille F˝ dont le bord avant est en prise avec le sommet x de la butée inférieure Bi, cas, très gênant, qui a déjà été discuté ci-dessus.

Un autre appareil permettant de former des paquets à partir du haut d'une feuille selon le préambule de la revendication 1 est décrit dans la demande de brevet FR-A-2 381 701. Dans cet appareil, la pile est maintenue en place du côté avant, c'est à dire du côté situé dans la direction de déplacement du paquet, relativement à la pile lors de sa formation, au moyen d'une plaque de guidage et un poussoir est prévu pour empêcher le déplacement vers l'arrière des feuilles de la pile, à l'exception d'au moins les dernières feuilles supérieures destinées à former le paquet. Un séparateur est mis en prise avec le bord d'au moins une feuille de la pile, cette feuille étant destinée à devenir la feuille inférieure du paquet à former.

Le séparateur est ensuite déplacé vers le haut de manière à créer un espace libre entre la feuille supérieure de la pile restante et la feuille inférieure du paquet. Pour terminer, le paquet est éloigné du dessus du reste de la pile pour être placé sur un système de transport.

La demande de brevet DE-A-2 735 721 Décrit un dispositif similaire utilisant un organe de transport dont une extrémité est introduite dans un espace libre de façon à ce que le paquet, ayant été libéré de la prise du séparateur, puisse prendre appui, par sa feuille inférieure sur un système de transport dans le but de l'éloigner du dessus du reste de la pile.

En conséquence, la présente invention a pour but de réaliser une machine qui permette une formation de paquets, à partir du haut d'une pile de feuilles, qui soit sûre, précise et sans perturbations et surtout qui évite qu'une feuille inférieure d'un paquet, lors de sa mise en place sur le système de transport, soit encore en prise avec la butée inférieure, ou encore, en d'autres termes, qui permette une parfaite séparation entre les feuilles qui doivent former le paquet à déplacer et celles qui doivent demeurer dans la pile.

Ce but est atteint grâce à une machine selon la revendication 1.

Un mode de réalisation de l'invention est maintenant décrit en référence au dessin annexé dans lequel :
- La figure 1 représente une des machines de formation de paquets à partir du haut d'une pile selon l'art antérieur;
- La figure 2 représente une vue simplifiée d'une machine selon l'invention;
- Les figures 3A à 3D sont des vues en coupe montrant la machine à différentes étapes de formation d'un paquet;
- La figure 4 est une coupe selon IV - IV de la figure 3B; et
- La figure 5 est une coupe selon V - V de la figure 3B;
- La figure 6 représente une vue d'un autre mode de réalisation d'un élément de la machine;

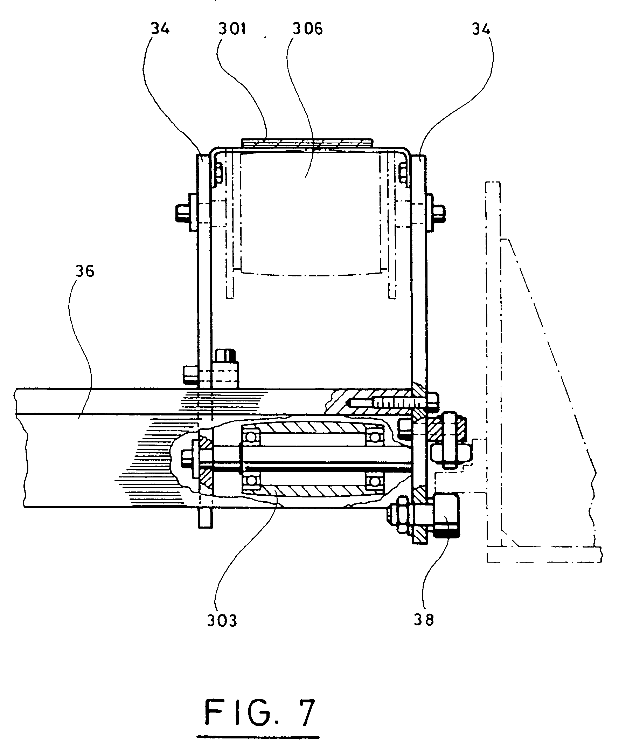

- La figure 7 est une vue selon A - A de la figure 3D; et

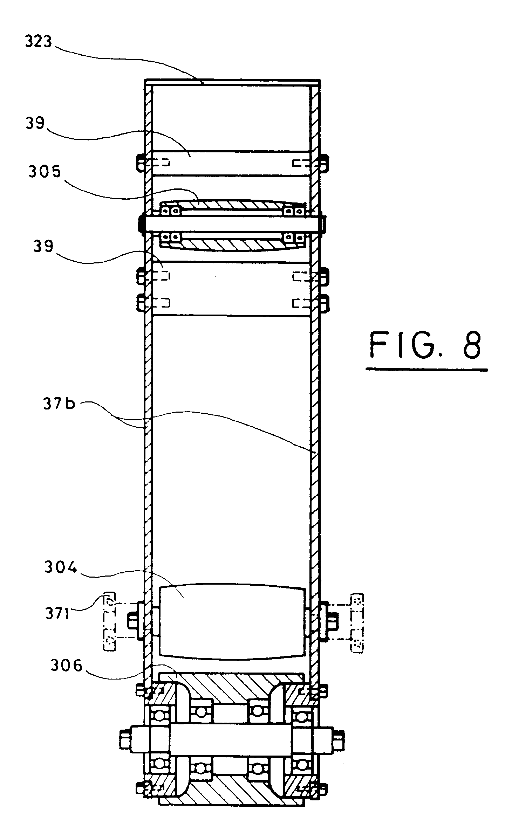

- La figure 8 est une vue en coupe selon C - C de la figure 3D.

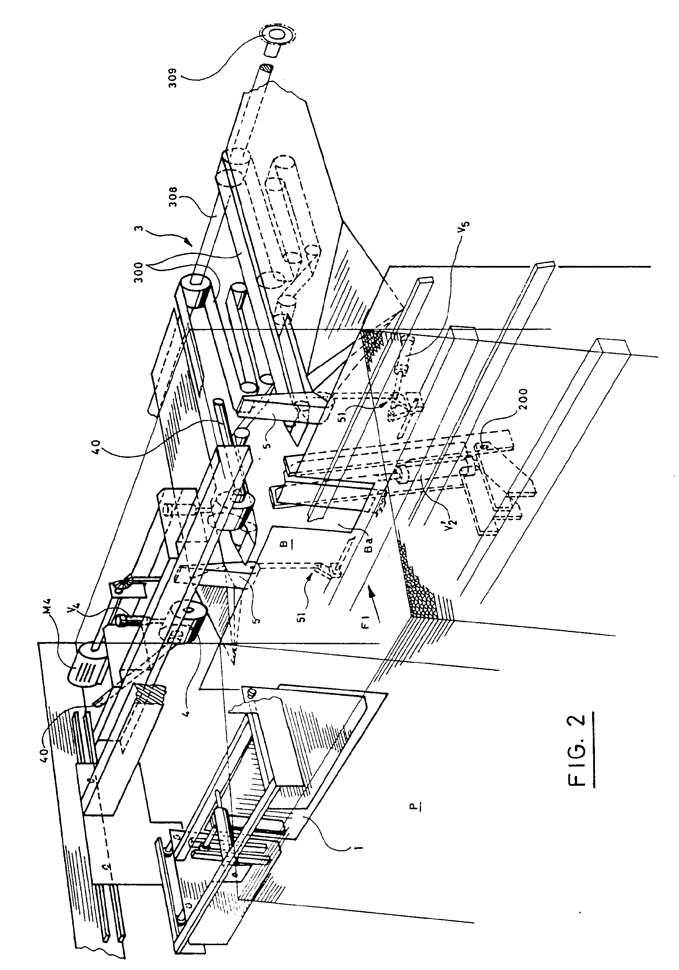

La figure 2 représente une vue de la machine à hauteur du sommet d'une pile P (représenté en traits fins) à partir de laquelle des paquets successifs doivent être formés. La figure 2 a essentiellement pour but de montrer la disposition générale des principaux éléments nécessaires à la compréhension de l'invention, à savoir :
- Une butée fixe B pour la face avant d'une pile;
- Un séparateur 2 de paquet situé au milieu du sommet de la butée avant B;
- Deux butées avant supérieures sous forme de volets basculables 5 et situés de chaque côté du séparateur 2 et exactement au-dessus et dans le prolongement de la butée fixe B;
- Un rangeur arrière mobile 1;
- Un dispositif 3 nommé introducteur, situé vis-à-vis de la face avant de la pile P et destiné à introduire, à proximité de chaque volet 5, une courroie 300 à l'intérieur de la pile P;
- Deux rouleaux presseurs 4 situés au-dessus du paquet E.

Dans la figure 2, la pile P, dont le sommet correspond environ à celui de la butée avant B, est dans l'état de début de formation d'un paquet qui, pour sa formation, doit être déplacé en direction de l'avant de la pile P, c'est-à-dire dans la direction de la flèche F1.

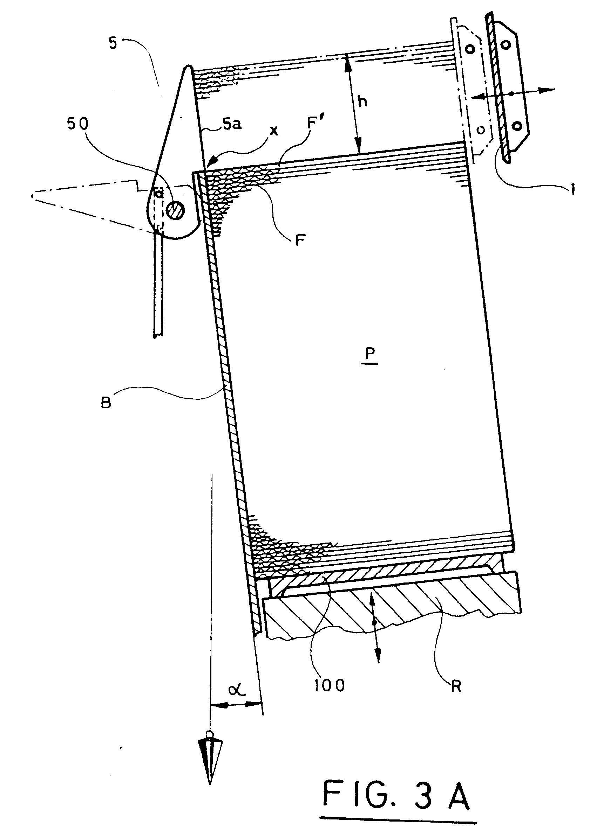

La figure 3A montre de façon simplifiée la pile P de feuilles F montée sur une palette 100, elle-même déplaçable vers le haut (de façon connue) à l'aide d'un monte-pile R de manière à ce que la face avant de la pile P soit verticalement inclinée d'un angle égal à 7°. La face avant de la pile est maintenue en place par la tôle ou butée avant fixe B dont l'extrémité supérieure x est de niveau avec la dernière feuille supérieure F′ de la pile à l'instant du début de formation d'un paquet E.

L'extrémité supérieure de la butée B, qui en principe se présente sous la forme d'une tôle s'étendant sur toute la largeur de la pile P, est prolongée par deux butées supérieures sous forme de volets basculants 5 de faible largeur. Chaque volet 5 peut basculer, autour d'un axe 50 fixé (par des moyens non représentés) sur la butée (inférieure) avant fixe B, à partir d'une première position représentée en traits pleins à une deuxième position représentée en traits discontinus, le basculement étant effectué à l'aide d'un vérin V5 agissant simultanément sur les deux volets 5 par l'intermédiaire d'un système à leviers et biellettes 51 (voir figure 2).

A l'instant où la formation d'un nouveau paquet E est souhaitée, la pile P est déplacée vers le haut, au moyen du monte-pile R, de façon à ce que la pile P dépasse l'extrémité supérieure x de la butée avant B d'une hauteur h qui soit à peu près égale à celle du paquet E à former, mais égale ou inférieure à celle de l'extrémité supérieure des volets 5.

En réalité, la hauteur h du paquet E est déterminée par l'intermédiaire d'un codeur angulaire (non représenté) qui, associé à un micro-processeur du système électronique de commande de la machine dans lequel sont introduites les valeurs suivantes :
- La hauteur totale de la pile P lors de son introduction dans la machine, c'est-à-dire avant la formation du premier paquet,
- L'épaisseur moyenne des feuilles,
- Le nombre de feuilles souhaitées par paquet, et
- Le nombre approximatif de feuilles pour les deux derniers paquets,

permet de commander le déplacement vers le haut du monte-pile R selon un nombre de déplacements consécutifs qui satisfassent les conditions posées au départ relatives aux différents paquets à former.

Lorsque la pile a été déplacée vers le haut, tel que représenté en traits discontinus dans la figure 3A, l'extrémité supérieure du bord avant de la pile P est maintenue en place par les deux volets 5. A cet instant, le rangeur arrière mobile 1 est déplacé, à l'aide du vérin V1, d'une première position, représentée en traits pleins, à une seconde position représentée en traits discontinus de manière à mettre sa face d'appui en contact avec l'extrémité supérieure de la face arrière de la pile P. En principe, la face d'appui du rangeur arrière 1 s'étend sur une grande partie de la largeur de la pile P et aussi sur une hauteur de cette dernière qui soit au moins égale à celle du paquet E à former.

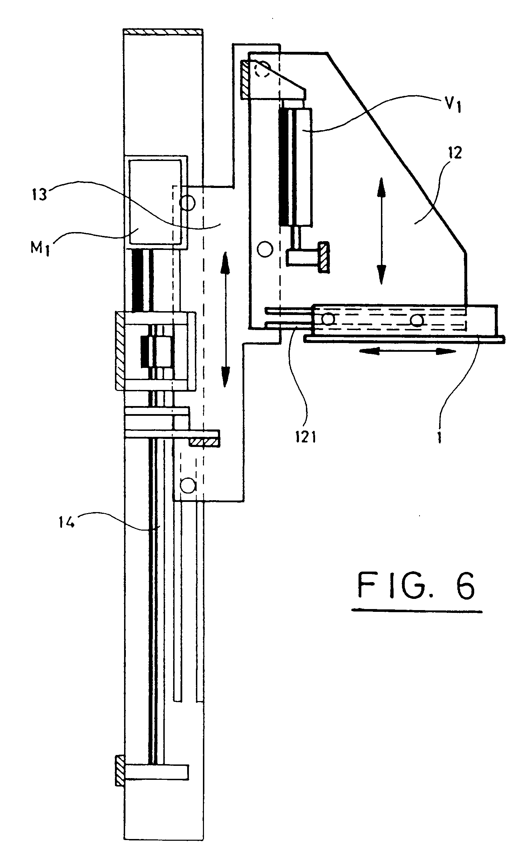

De préférence, le rangeur arrière 1, comme cela est représenté dans la figure 6, est monté réglable en hauteur sur un premier chariot 12 déplaçable, à l'aide d'un vérin V1, sur un deuxième chariot 13. Le deuxième chariot 13 peut aussi être horizontalement déplacé, à l'aide d'un moteur M1 et d'un système à vis-écrou 14, en vue d'adapter la position du rangeur arrière 1 au format des feuilles F de la pile P.

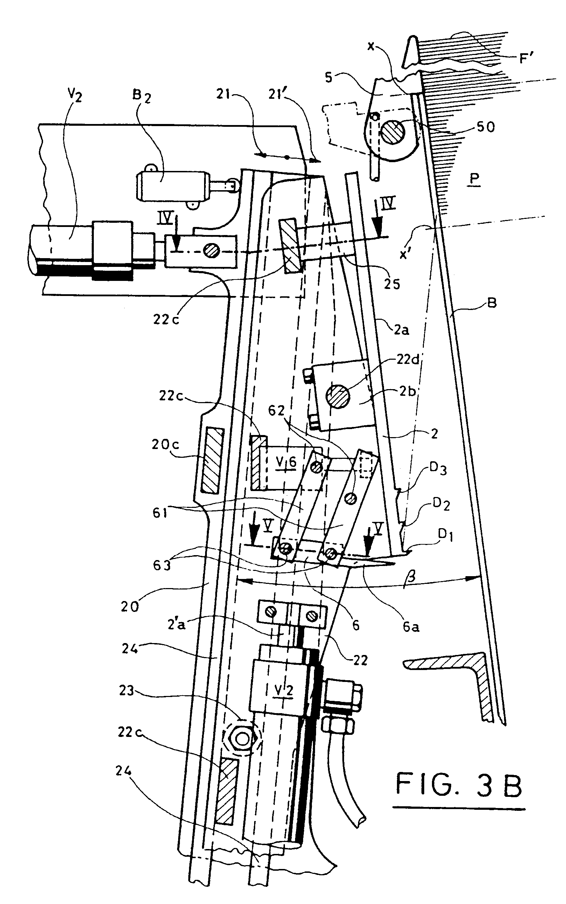

Dans la figure 3B, la position de la pile P correspond à celle représentée en traits discontinus dans la figure 3A. Au milieu avant de la pile P et légèrement plus bas que l'extrémité supérieure x de la butée avant B, et partant, de la dernière feuille supérieure F′ de la pile P, se trouve le séparateur 2 qui pourra venir en contact avec la pile P en passant au travers d'une ouverture correspondante Ba prévue dans la butée avant B.

Le séparateur 2 possède une surface d'appui 2a dont la largeur est relativement courte, par exemple 10 cm, mais dont la hauteur est au moins égale à celle h du paquet E à former.

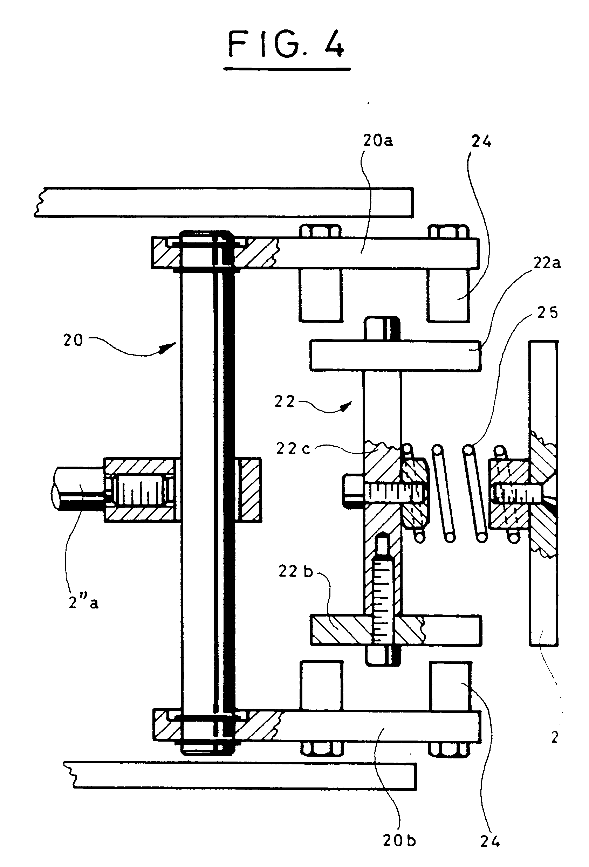

A l'avant de la pile P est prévu un support principal 20 s'étendant verticalement et basculable, au moyen d'un vérin V2, autour d'un axe 200 situé à son extrémité inférieure, selon les flèches 21, 21′ c'est-à-dire d'arrière en avant et vice-versa. Un support auxiliaire 22 est monté déplaçable verticalement, à l'aide d'un vérin V2′, sur le support principal 20. Des galets 23, fixés sur le support auxiliaire 22 et en prise avec des rails 24 du support principal 20 assurent le guidage du support auxiliaire 22 relativement au support principal 20. En réalité, de la figure 4, il est possible de voir que le support principal 20 est constitué de deux plaques 20a, 20b reliées entre elles par des entretoises 20c (dont une seule est visible). La tige de sortie 2′a du vérin V2 est en prise avec une tige 2′b reliées aux deux plaques 20a, 20b. Le support auxiliaire 22, situé entre les deux plaques 20a, 20b du support principal 20, est lui aussi constitué de deux plaques 22a, 22b, reliées entre elles par des entretoises 22c, dont une est en prise avec la tige de sortie 2′a du vérin V′2.

L'extrémité inférieure du séparateur 2 est munie de plusieurs dents D1, D2, D3 décalées dans sa hauteur et s'étendant sur toute sa largeur.

Le séparateur 2 est muni, environ au milieu de sa hauteur, d'un palier 2b traversé par un axe 22d, lui-même relié par ses deux extrémités aux deux plaques 22a, 22b; ainsi, le séparateur 2 peut basculer, autour de l'axe 22d, relativement au support auxiliaire 22. Le basculement du séparateur 2 est limité dans un sens par le fait que son extrémité inférieure vient en contact avec les deux plaques 22a, 22b du support auxiliaire 22 selon une position telle que sa face d'appui 2a soit parallèle à la face avant de la pile P, c'est-à-dire parallèle à la butée avant B, et, dans l'autre sens, par un ressort 25 situé vers le sommet du séparateur 2 et interposé entre ce dernier et une traverse 22c du support auxiliaire 22.

En vue de former un nouveau paquet E, les opérations suivantes sont effectuées successivement
- Maintien du support principal 20 selon un basculement vers l'avant (c'est-à-dire éloigné de la pile P) en contact avec une butée de fin de course B2, de manière à ce que la direction de guidage des rails 24 forme avec celle de la butée avant B un angle β égal à 12°;
- Déplacement du rangeur arrière 1 vers l'avant de façon à mettre sa face d'appui en contact avec le sommet de la face arrière de la pile P (tel que représenté en traits discontinus dans la figure 3A);
- Déplacement du séparateur 2 vers le haut, à l'aide du vérin V′2, de manière que la dent la plus basse D1 vienne en contact avec la face avant de la pile P à une hauteur x′ légèrement inférieure à celle x de l'extrémité supérieure de la butée avant B;
- Léger basculement vers l'arrière, c'est-à-dire en direction de la pile P, du support principal 20 de manière à presser la surface d'appui 2a du séparateur en contact avec la face avant de la pile P et mettre ainsi la dent inférieure D1 solidement en prise avec une feuille F˝ qui constituera la feuille inférieure du nouveau paquet E à former;
- Déplacement (après interruption ou non) du séparateur 2 vers le haut de manière à créer, sous l'endroit où la dent D1 est en prise avec la feuille inférieure F˝ du paquet E, un espace libre M suffisamment grand pour pouvoir y introduire un doigt de sécurité 6 (comme on le verra par la suite). Il est à remarquer que, pendant ce déplacement, le parallélisme entre la face d'appui 2a du séparateur et la face avant du nouveau paquet E, parallélisme nécessaire pour le maintien d'une prise correcte des dents D1, D2 et D3 avec le nouveau paquet E, est assuré par le pivotement du séparateur 2 autour de son axe 22d. La fonction des deux dents supérieures D2 et D3 est aussi de supporter le nouveau paquet E dont le poids pourrait être trop lourd pour la seule dent inférieure D1 dont les dimensions sont réduites pour faciliter sa mise en prise avec la feuille inférieure F˝ du paquet E.

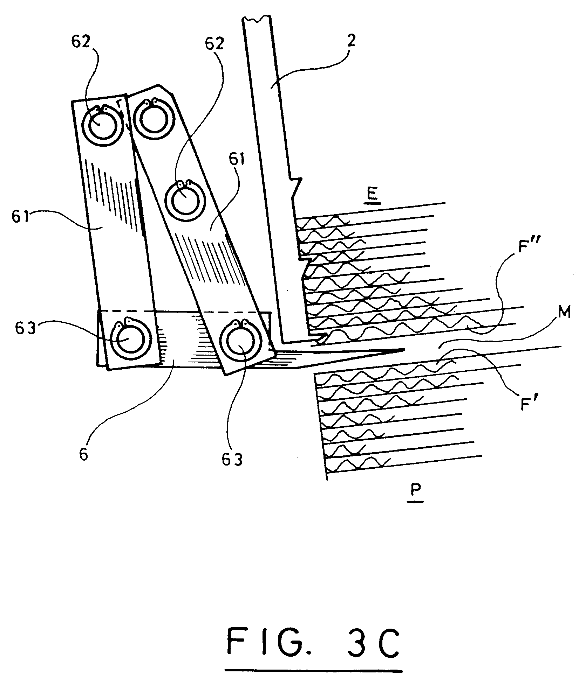

Comme cela est représenté à la figure 3C, sitôt que le paquet E a été très légèrement soulevé à l'endroit du séparateur 2, le doigt de sécurité 6 est introduit dans l'espace libre M, encore relativement minime, situé entre la pile P et le paquet E.

Le doigt de sécurité 6 est aussi monté basculable, sur le support auxiliaire 22, à l'aide d'un jeu de quatre biellettes 61 dont une extrémité de chacune est montée en rotation libre sur des axes 62 fixés sur ce même support 22, et dont l'autre extrémité est reliée, à l'aide d'un autre axe 63, au doigt de sécurité 6. La dimension et la disposition des biellettes 61 sont telles, que lorsqu'un vérin V6 monté sur une traverse 22c du support 22 et dont la tige de sortie est en prise avec l'extrémité supérieure d'une biellette 61, entraîne toutes les biellettes en rotation autour des axes 62, on obtienne un déplacement essentiellement horizontal du doigt de sécurité 6, de manière que son doigt 6a proprement dit, relativement mince mais beaucoup plus long que la dent D1 du séparateur 2, puisse pénétrer dans l'espace libre M. De plus, la forme et les dimensions du doigt 6a sont choisies assez petites pour que ledit doigt puisse aisément pénétrer dans l'espace libre M en début de formation, c'est-à-dire à l'instant où le paquet E n'a encore que très légèrement été soulevé par la dent D1 du séparateur 2, mais tout de même suffisamment grandes pour obtenir - lors du déplacement vers le haut du doigt de sécurité 6 et du séparateur 2, entraînés tout deux par le support auxiliaire 22 - un soulèvement correct et sûr du bord avant du paquet E. Le doigt de sécurité 6 a donc pour fonction de récupérer le bord avant des feuilles inférieures du paquet E qui, pendant l'introduction des deux courroies 300, pourraient se libérer de la prise de la dent inférieure D1 lors du déplacement du séparateur 2 vers le haut.

La figure 4 est une vue de dessus en coupe montrant la disposition du séparateur 2 et des deux supports 20 et 22.

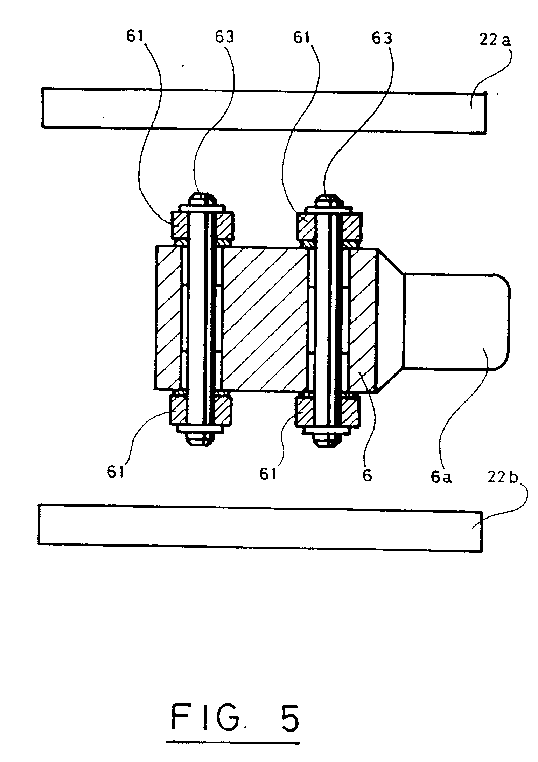

La figure 5 est une vue en coupe de dessus montrant le doigt de sécurité 6 de même que la disposition des quatre biellettes 61.

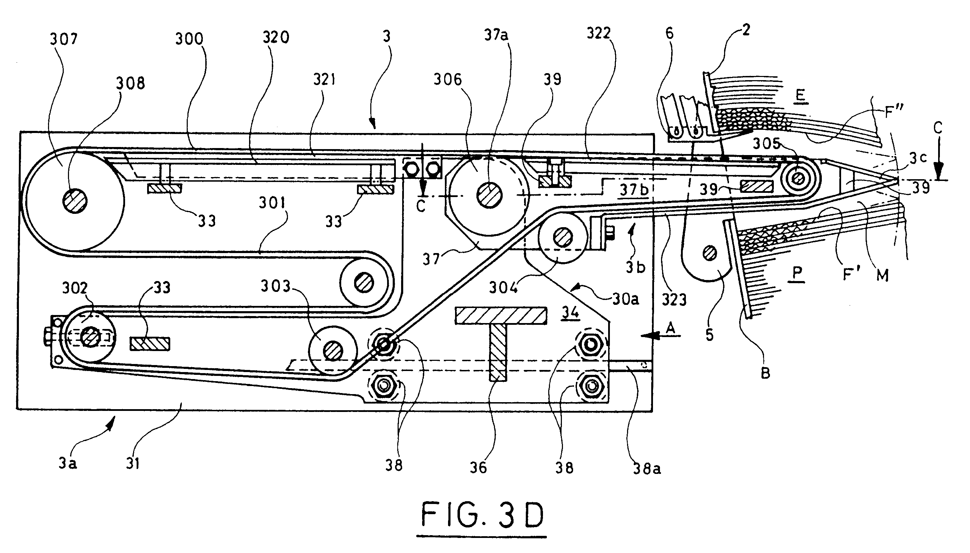

La figure 3D montre l'instant où l'espace libre M est suffisamment grand pour que l'introducteur 3 de courroies 300 puisse y pénétrer en vue d'éloigner le paquet E par rapport à la partie supérieure de la pile P.

L'introducteur 3 de courroies 300 est du genre télescopique, c'est-à-dire comporte deux parties, dont l'une est déplaçable par rapport à l'autre. Dans ce but, l'introducteur 3 comporte un bâti fixe 3a s'étendant sur toute la largeur avant de la pile P et constitué de deux plaques latérales 31 (dont une seule est visible dans la figure 3D) réunies entre elles par des entretoises 33. Le bâti fixe 3a est prolongé, en direction de la pile P, par deux doigts introducteurs déplaçables 3b (dont un seul est représenté dans la figure 3D) situés en face et de chaque côté du séparateur 2 décrit plus haut.

Par la suite, un seul doigt introducteur 3b est décrit, étant entendu que l'autre lui est identique.

Chaque doigt introducteur 3b comprend un support 30a horizontalement déplaçable par rapport au bâti fixe 3a. Le support déplaçable 30a est constitué de deux plaques 34 (dont une seule est représentée) reliées entre elles par des entretoises 36. Des galets 38 montés sur chacune des deux plaques 34 et en prise avec des guidages correspondants 38a prévus sur le bâti fixe 3a assurent le guidage du support déplaçable 30a. Sur le support déplaçable 30a, est aussi monté un support basculable 37 constitué, lui aussi, de deux plaques 37b (dont une seule est représentée) reliées entre elles par des entretoises 39. Le support 37 est librement basculable, relativement au support déplaçable 30a, autour d'un axe 37a dont les extrémités sont fixées aux deux plaques 34 du support déplaçable 30a. Le support 37 est aussi muni de galet 371 en prise avec des rails de guidage (non représentés) prévus sur les plaques 31 du bâti fixe 3a et qui autorisent un pivotement libre du support 37 autour de l'axe 37a et aux environs de la position horizontale. En vue du guidage d'une courroie 300, plusieurs poulies 301-307 sont montées sur le bâti fixe 3a et le doigt introducteur 3b de manière à réaliser un circuit à boucle fermée munie d'une poulie 301 de compensation de distance lors du déplacement du support 30a par rapport au bâti fixe 3a. La disposition de ces poulies 301-307 n'a pas besoin d'être décrite ici plus en détail; il suffit de s'en référer à la figure 3D. L'entraînement de la courroie 300 est réalisé au moyen de la poulie 307 fixée sur un arbre 308 dont les extrémités sont montées en rotation libre sur les deux plaques 31 du bâti fixe 3a. Une poulie similaire 307 montée sur l'arbre 308 est aussi prévue pour la courroie 300 du second doigt introducteur 3b de manière à obtenir un entraînement identique et simultané des deux courroies 300 de l'introducteur 3, comme cela est visible dans la figure 2 où l'arbre 308 est muni à une extrémité d'une poulie d'entraînement 309.

Des plaques de guidage 320, 321, 322 du paquet E et de protection 323 de la courroie 300 sont prévus sur l'introducteur 3. L'extrémité libre de chaque doigt introducteur 3b se termine par un bout 3c, situé au delà de la dernière poulie 305 de la boucle fermée et présentant, vu de profil, une forme conique destinée à faciliter l'introduction du doigt introducteur 3b dans l'espace libre M de la pile P. Cette facilité de pénétration sera aussi augmentée grâce au fait que le support 37 est librement basculable vers le haut à partir d'une position horizontale de façon à ce qu'il suffise de prévoir que ce soit la face inférieure du bout conique 3c qui vienne en contact avec le bord avant de la pile P, le support 37 pouvant ensuite basculer vers le haut si nécessaire. De plus, pour obtenir un déplacement simultané des deux supports déplaçables 30a de chaque doigt introducteur 3b, ces deux supports 30a sont reliés entre eux par une traverse 36 sur laquelle peut agir un vérin (non représenté).

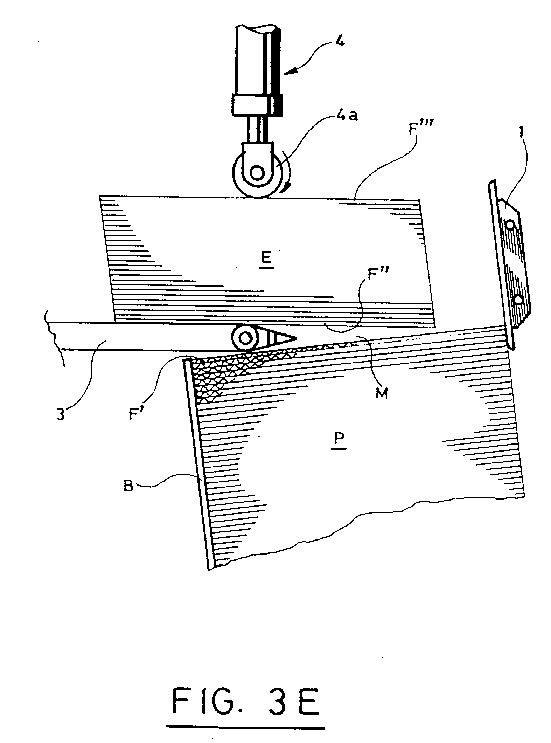

La figure 3E montre l'instant où chaque doigt introducteur 3b est parvenu à la fin de sa course vers l'arrière dans l'espace libre M. A ce moment-là, les opérations suivantes sont effectuées :
- Déplacement vers le bas des deux rouleaux presseurs 4, situés au-dessus du paquet E et transversalement décalés, pour les mettre en contact de pression avec la feuille supérieure F‴ du paquet E. Les deux rouleaux presseurs sont entraînés en rotation à une vitesse périphérique identique et de même sens que la vitesse des courroies 300 de façon à provoquer un déplacement de tout le paquet E vers l'avant;
- Basculement des volets 5 vers l'arrière de manière à libérer le passage vers l'avant pour le paquet E;
- Basculement du support principal 20 vers l'avant et, simultanément, déplacement vers le bas du support auxiliaire 22 de façon à ce que le paquet E puisse descendre et prendre appui, par sa feuille inférieure F˝, sur les deux courroies 300 de l'introducteur 3.

Comme cela est représenté dans la figure 2, chaque rouleau 4 est verticalement déplaçable à l'aide d'un moteur M4 et peut être pressé en direction du paquet E par un vérin V4. Des arbres 40 avec cardans sont aussi prévus pour entraîner en rotation chaque rouleau 4.

Lorsque le paquet reposera, selon à peu près toute la superficie de sa feuille inférieure F˝, sur les courroies 300 de l'introducteur 3, les rouleaux presseurs 4 seront déplacés vers le haut puisque leur action à l'avancement du paquet E n'est plus nécessaire. Ensuite, le paquet E quittera l'introducteur 3 pour venir sur un autre système de transport (non représenté) qui va le transférer, par exemple, sur la station d'introduction d'une presse à découpage.

Ensuite, après basculement des volets 5 dans leur position haute et déplacement vers l'arrière du rangeur arrière 1, la pile P sera déplacée vers le haut, à l'aide du monte-pile R, de manière que sa feuille supérieure F′ soit à hauteur de l'extrémité supérieure x de la butée avant B. A cet instant, la machine est prête pour un nouveau cycle de formation d'un paquet.

Il est à remaquer que, dans le procédé de formation de paquet décrit ci-dessus, de nombreux détecteurs de position d'éléments mobiles, de la pile ou du paquet sont utilisés, par exemple pour déterminer l'instant :
- Où la feuille supérieure F′ de la pile P se trouve à l'extrémité supérieure de la butée avant B;
- Où le paquet E repose suffisamment par sa feuille inférieure F˝ sur les courroies 300 de l'introducteur 3 pour qu'il soit possible de déplacer le presseur 4 vers le haut; et
- Où le paquet E quitte l'introducteur 3; etc.

Le procédé de formation de paquet décrit ci-dessus résoud donc bien le problème posé puisque le fait de placer l'introducteur de courroies 3 dans l'espace M, situé entre le nouveau paquet E et la pile P, crée une claire distinction entre les feuilles qui doivent rester dans la pile P et celles qui, faisant partie du paquet E, doivent être déplacées vers l'avant. De plus, les feuilles du paquet E étant en quelque sorte tirées par l'avant - et non poussées par l'arrière - il n'y a plus de danger qu'elles soient soumises à des déformations qui provoqueraient une dislocation du paquet E en cours de formation.

## Revendications

1. Machine de formation de paquets, à partir du haut d'une pile d'éléments en plaque ou feuilles, destinés, dans une installation de production d'emballages, à être transférés dans la station d'introduction d'une machine travaillant les éléments en plaque ou feuilles, dans laquelle les opérations suivantes sont successivement effectuées :
- Une pile de feuilles est maintenue en place du côté avant, c'est-à-dire du côté situé dans la direction de déplacement d'un paquet, relativement à la pile (P) lors de sa formation, au moyen d'une butée fixe (B) empêchant le déplacement, vers l'avant, des feuilles (F) de la pile, à l'exception d'au moins les deux dernières feuilles supérieures destinées à former un paquet (E);
- Un séparateur (2) est mis en prise avec un bord d'au moins une feuille, de la partie de la pile, destinée à devenir la feuille inférieure (F˝) du paquet à former;
- Le séparateur est déplacée vers le haut de manière à créer un espace libre (M) entre la feuille supérieure (F′) de la pile restante et la feuille inférieure du paquet;
- Le paquet est éloigné du dessus du reste de la pile pour être placé sur un système de transport (3);
- Un rangeur arrière (1) empêche, pendant la formation du paquet, un déplacement vers l'arrière d'au moins lesdites dernières feuilles supérieures de la pile;
- Le séparateur est mis en prise avec le bord avant de ladite feuille inférieure; et
- Une extrémité (3b) du système de transport est introduite dans ledit espace libre de façon à ce que le paquet, ayant été libéré de la prise du séparateur, puisse prendre appui, par sa feuille inférieure, sur le système de transport et être éloigné du dessus du reste de la pile, caractérisée en ce que :
- Le système de transport (3) comprend une première partie fixe (3a) et une seconde partie (30a, 3b) déplaçable, relativement à la première partie (3a), de manière à pouvoir pénétrer dans l'espace libre (M);
- La deuxième partie (30a, 3b) comprend un premier support (30a) déplaçable par rapport à la première partie (3a), et un deuxième support (37) sous forme de doigt (3b) basculable, autour d'un axe horizontal (37a), relativement au premier support (30a).

2. Machine selon la revendication 1, dans laquelle le système de transport (3) est au moins une courroie (300), caractérisée en ce que la courroie (300) est guidée à l'aide de poulies (301-307) montées sur lesdites deux parties (3a, 30a) de manière à former un circuit à boucle fermée, une poulie (301) étant disposée de manière à compenser la variation de distance dudit circuit lors d'un déplacement relatif entre lesdites deux parties (3a, 30a).

3. Machine selon la revendication 2, caractérisée en ce qu'une poulie de renvoi (305) est située à proximité de l'extrémité libre du doigt basculable (3b) dont le bout (3c), vu de profil, présente la forme d'un cône dirigé vers la pile (P).

4. Machine selon la revendication 1, dans laquelle la butée (B) est inclinée selon un angle d'environ 7°, caractérisée en ce qu'au dessus de l'extrémité supérieure (x) de la butée (B) est prévue au moins une butée avant supérieure (5) déplaçable entre une première position dans laquelle elle maintient en place le bord avant des feuilles supérieures de la pile (P) et une deuxième position dans laquelle elle permet le déplacement, vers l'avant, du paquet (E).

5. Machine selon la revendication 4, caractérisée en ce que la butée avant supérieure (5) est basculable, de ladite première à ladite seconde position, autour d'un axe (50), monté sur la butée avant fixe (B).

6. Machine selon la revendication 1, dans laquelle le séparateur (2) comporte une première dent (D1) destinée à venir en prise avec la feuille inférieure (F˝) du paquet (E) à former, caractérisée en ce que des moyens (20, 22) sont prévus pour déplacer le séparateur (2) de manière que la dent (D1), lors de sa mise en prise avec une des feuilles de la pile (P) destinée à former la feuille inférieure (F˝) du paquet (E), se dirige vers la pile (P) selon une direction formant un angle d'environ 12° par rapport à la face avant de la pile (P).

7. Machine selon la revendication 6, caractérisée en ce que le séparateur (2) comprend une face d'appui (2a) munie d'au moins une dent auxiliaire (D2, D3) située au-dessus de la première dent (D1).

8. Machine selon la revendication 7, caractérisée en ce que le séparateur (2) est monté sur un support auxiliaire (22), qui est déplaçable, essentiellement verticalement, sur un support principal (20) qui est déplaçable, ou basculable, en direction de la pile (P) de manière à pouvoir presser le séparateur (2) contre cette dernière lorsqu'au moins la première dent (D1) est en prise avec le paquet (E) à former.

9. Machine selon la revendication 8, caractérisée en ce qu'au fonctionnement du séparateur (2) est associé un élément de sécurité (6), comprenant un élément sous forme de doigt (6a) et déplaçable entre une première position dans laquelle il se trouve à l'avant de la butée avant fixe (B), et une deuxième position dans laquelle au moins son doigt (6a) se trouve dans ledit espace libre (M) au dessous de la première dent (D1) du séparateur (2).

10. Machine selon la revendication 9, caractérisée en ce que le doigt de sécurité (6) est basculable autour d'un axe (62) monté sur le support auxiliaire (22).

11. Machine selon la revendication 5, caractérisée en ce que le séparateur (2) est basculable autour d'un axe (22d), parallèle à la butée avant (B).

12. Machine selon la revendication 8, caractérisée en ce que le séparateur (2) est basculable entre une première position fixe où il est parallèle à la butée avant (B), position déterminée par le contact de l'extrémité inférieure du séparateur (2) avec le support auxiliaire (22) et une deuxième position variable déterminée par un ressort (25) interposé entre l'extrémité supérieur du séparateur (2) et le support auxiliaire (22).

13. Machine selon la revendication 1, caractérisée en ce qu'au moins un élément presseur (4), sous forme de courroie(s) ou de rouleaux (4a) susceptibles d'être ou non entraînés en mouvement, est prévu au-dessus de la pile (P) et déplaçable entre une première position éloignée de la feuille supérieure (F‴) du paquet (E), et une seconde position où il se trouve en pression de contact avec ladite feuille supérieure (F‴), des moyens étant aussi prévus pour adapter la position du presseur (4) à la hauteur de la pile (P).

14. Machine selon la revendication 1, caractérisée en ce que le rangeur arrière (1) se présente sous la forme d'une plaque rectangulaire (1) montée de façon réglable en hauteur sur un premier chariot horizontal (12), qui peut être poussé par un vérin (V1) en direction de la pile (P), ce premier chariot (12) étant monté sur un deuxième chariot horizontal (13) de mise au format et déplaçable à l'aide d'un système de vis sans fin (14) entraîné en rotation par un moteur (M1).

## Patentansprüche

1. Maschine zur Bildung von Teilstapeln vom Oberteil eines Hauptstapels von platten- oder bogenartigen Werkstücken, wobei die Teilstapel in einer Einrichtung zur Herstellung von Verpackungen in eine Einführstation einer platten- oder bogenartige Werkstücke verarbeitenden Maschine gefördert werden sollen, in welcher folgende Vorgänge nacheinander ausgeführt werden :
- ein Hauptstapel aus Bogen wird an seiner Vorderseite, das heisst, in der Laufrichtung eines zu bildenden Teilstapels in bezug auf den Hauptstapel (P) mit Hilfe eines festen Anschlags (B) zur Vermeidung einer Verschiebung der Bogen (F) des Hauptstapels (P) nach vorn mit Ausnahme der zwei letzten, oberen zur Bildung eines Teilstapels (E) bestimmten Bogen festgehalten;
- eine Stapeltrennvorrichtung (2) wird mit einem Rand wenigstens eines im Hauptstapel enthaltenen Bogens, der zum untersten Bogen F˝ des zu bildenden Teilstapels werden soll, in Kontakt gebracht;
- eine Stapeltrennvorrichtung wird angehoben, bis zwischen dem obersten Bogen (F′) des restlichen Hauptstapels und dem untersten Bogen des Teilstapels ein freier Raum (M) entsteht;
- der Teilstapel wird vom restlichen Hauptstapel abgehoben und auf eine Transportvorrichtung (3) gelegt;
- Während der Bildung des Teilstapels verhindert ein hinterer Geraderichter (1) die Rückwärtsverschiebung wenigstens der letzten, obersten Bogen des Hauptapels;
- Die Stapeltrennvorrichtung setzt am Vorderrand des besagten untersten Bogens an; und
- Ein Ende (3b) der Transportvorrichtung wird in den erwähnten freien Raum so eingeführt, dass der von der Stapeltrennvorrichtung freigegebene Teilstapel mit seinem untersten Bogen auf der Transportvorrichtung abgesetzt und vom restlichen Hauptstapels abgehoben werden kann, dadurch gekennzeichnet, dass :
- die Transportvorrichtung (3) einen ersten festen Teil (3a) und einen zweiten verschiebbaren Teil (30a, 3b) umfasst, der in bezug auf den ersten Teil (3a) so verschoben werden kann, dass er in den freien Raum (M) eindringen kann;
- der zweite Teil (30a, 3b) einen ersten Halter (30a) umfasst, der sich in bezug auf den ersten Teil (3a) sowie einen zweiten Halter (37) in der Form eines Stifts (3b), welcher um eine horizontale Achse (37a) in bezug auf den ersten Halter (30a) geschwenkt werden kann, verschieben lässt.

2. Maschine gemäss Patentanspruch 1, in welcher die Transportvorrichtung (3) wenigstens aus einem Riemen (3) besteht, dadurch gekennzeichnet, dass der Riemen (300) mit Hilfe von auf die beiden besagten Teile (3a, 30a) montierten Riemenscheiben (301-307) so geführt wird, dass ein Endlosumlauf gebildet wird, wobei eine Riemenscheibe (301) so angeordnet ist, dass der variierende Abstand des besagten Umlaufs bei der verhältnismässigen Verschiebung zwischen den beiden besagten Teilen (3a, 30a) ausgeglichen werden kann.

3. Maschine gemäss Patentanspruch 2, dadurch gekennzeichnet, das sich eine Umlenkriemenscheibe (305) in der Nähe des freien Endes des schwenkbaren Stifts (3b), dessen Ende (3c) als Profil gesehen einen gegen den Hauptstapel (P) gerichteten Konus darstellt, befindet.

4. Maschine gemäss Patentanspruch 1, in welcher der Anschlag (B) um einen Winkel von ungefähr 7° geneigt ist, dadurch gekennzeichnet, dass auf dem oberen Ende (x) des Anschlags (B) wenigstens ein vorderer, oberer Anschlag (5) vorgesehen ist, der zwischen einer ersten Stellung, in welcher er den Vorderrand der obersten Bogen des Hauptstapels (P) festhält, und einer zweiten Stellung, in welcher er die Vorwärtsbewegung des Teilstapels (E) gestattet, verschiebbar ist.

5. Maschine gemöäss Patentanspruch 4, dadurch gekennzeichnet, dass der vordere, obere Anschlag (5) um eine Achse (50) am vorderen festen Anschlag (B) von der besagten ersten Stellung in die besagte zweite Stellung geschwenkt werden kann.

6. Maschine gemäss Patentanspruch 1, in welcher die Stapeltrennvorrichtung (2) einen ersten Zahn (D1) umfasst, der beim untersten Bogen (F˝) des zu bildenden Teilstapels (E) ansetzt, dadurch gekennzeichnet, dass Mittel (20, 22) vorgesehen sind, um die Stapeltrennvorrichtung (2) so zu verschieben, dass der Zahn (D1) beim Ansetzen an einem Bogen des Hauptstapels (P) zum Bestimmen des untersten Bogens (F˝) des Teilstapels (E) sich in einer Richtung gegen den Hauptstapel (P), die in bezug auf die Vorderseite des Hauptstapels (P) einen Winkel von ungefähr 12° bildet, bewegt.

7. Maschine gemäss Patentanspruch 6, dadurch gekennzeichnet, dass die Stapeltrennvorrichtung (2) eine Auflagefläche (2a) wenigstens einen Hilfszahn (D2, D3) über dem ersten Zahn (D1) aufweist.

8. Maschine gemäss Patentanspruch 7, dadurch gekennzeichnet, dass die Stapeltrennvorrichtung (2) an einem Hilfshalter (22) befestigt ist, der vor allem vertikal an einem Haupthalter (20) verschoben werden kann, welch letzterer in Richtung Hauptstapel (P) verschiebbar oder schwenkbar ist, um so die Stapeltrennvorrichtung (2) gegen den besagten Hauptstapel zu drücken, wenn wenigstens der erste Zahn (D1) in den zu bildenden Teilstapel (E) eingreift.

9. Maschine gemäss Patentanspruch 8, dadurch gekennzeichnet, dass die Stapeltrennvorrichtung (2) im Verbund mit einer Sicherheitsvorrichtung arbeitet, welch letztere einen Bauteil in der Form eines Stifts (6a) umfasst, und zwischen einer ersten Stellung, in welcher er sich vor dem vorderen, festen Anschlag (B) befindet, und einer zweiten Stellung, in welcher wenigstens sein Stift (6a) im besagten freien Raum (M) unter dem ersten Zahn (D1) der Stapeltrennvorrichtung (2) angeordnet ist, verschoben werden kann.

10. Maschine gemäss Patentanspruch 9, dadurch gekennzeichnet, dass der Sicherheitsstift (6) um eine am Hilfshalter (22) angebrachte Achse (62) geschwenkt werden kann.

11. Maschine gemäss Patentanspruch 5, dadurch gekennzeichnet, dass die Stapeltrennvorrichtung (2) um eine Achse (22d) in Parallelität zum vorderen Anschlag (B) geschwenkt werden kann.

12. Maschine gemäss Patentanspruch 8, dadurch gekennzeichnet, dass die Stapeltrennvorrichtung (2) zwischen einerseits einer ersten, festen Stellung parallel zum vorderen Anschlag (B), welch letztere durch den Kontakt des unteren Endes der Stapeltrennvorrichtung (2) mit dem Hilfshalter (22) bestimmt wird, und andererseits einer zweiten variablen Stellung, die durch eine Feder (25) zwischen dem oberen Ende der Stapeltrennvorrichtung (2) und dem Haupthalter (22) bestimmt wird, geschwenkt werden kann.

13. Maschine gemäss Patentanspruch 1, dadurch gekennzeichnet, dass wenigstens eine Druckvorrichtung (4) in der Form eines oder mehrerer Riemen oder Rollen (4a), die gegebenenfalls angetrieben werden können, über dem Hauptstapel (P) vorgesehen ist, und zwischen einer ersten, vom obersten Bogen (F‴) des Teilstapels (E) entfernten Stellung und einer zweiten Stellung, in welcher er Druckkontakt mit dem besagten obersten Bogen (F‴) hat, verschoben werden kann, wobei auch Mittel zur Anpassung der Stellung der Druckvorrichtung (4) an die Höhe des Hauptstapels (P) vorgesehen sind.

14. Maschine gemäss Patentanspruch 1, dadurch gekennzeichnet, dass der hintere Geraderichter (1) die Form einer in der Höhe verstellbaren, rechteckigen Platte auf einem ersten, horizontalen Wagen (12) aufweist, welch letzterer durch einen Druckzylinder (V1) gegen den Hauptstapel (P) gedrückt werden kann, wobei der erste Wagen (12) auf einem zweiten horizontalen Wagen (13) zur Formateinstellung angeordnet ist und mit Hilfe eines Schneckenantriebs (14) mit Motor (M1) verschoben wird.

## Claims

1. Machine for making packages from the top of a pile of plate or sheet-like workpieces in a package production installation, destined to be transferred into the infeed station of a machine processing plate or sheet-like workpieces and in which the following operations are to be accomplished successively:
- The pile is held in place at its front side, ie the side situated in the transfer direction of the batch with regard to the pile (P) during the build-up of the batch, which holding action is ensured by a fixed stop (B) preventing a forward motion of the sheets (F) of the pile with the exception of at least the two uppermost sheets destined to make up the batch (E).
- A separator (2) is engaged with the edge of at least one sheet of the pile destined to become the lowermost sheet (F˝) of the batch to be built up;
- The separator is shifted upward so as to create a free space (M) between the uppermost sheet (F′) of the remaining pile (P) and the lowermost sheet (F˝) of the batch (E);
- The batch (E) is removed from the top of the remaining pile (P) with a view to being carried over onto a conveyance system (3);
- A rear jogger (1) prevents a rearward motion of at least the said last upper sheets of the pile during the build-up of the batch (E);
- The separator is engaged with the front edge of the said lowermost sheet; and
- An end (3b) of the conveyance system is moved into the said free space so that the batch, at this stage set free from the separator, may get a hold with its lowermost sheet on the conveyance system and be removed from the top of the remaining pile, characterized by:
- The conveyance system (3) comprising a first, fixed, part (3a) and a second part (30a, 3b) shiftable with regard to the first part (3a) in order to thus be able to penetrate into the free space (M).
- The second part (30a, 3b) comprising a first support (30a) shiftable with regard to the first part (3a), and a second support (37) having the shape of a finger (3b) tiltable around a horizontal axle (37a) with regard to the first support (30a).

2. Machine according to claim 1, in which the conveyance system (3) consists of at least one belt (300), characterized by the belt (300) being guided by pulleys (301-307) fitted on the said two parts (3a, 30a) so as to form a closed circuit, a pulley (301) being arranged so as to make up for the distance variation of the said circuit in the event of a shift taking place relatively between the said two parts (3a, 30a).

3. Machine according to claim 2, characterized by a return pulley (305) being situated in the vicinity of the free end of the tiltable finger (3b) of which the end (3c), in profiled view, has the shape of a cone directed against the pile (P).

4. Machine according to claim 1, on which the front stop (B) has a slanting position with a angle of about 7°, characterized by the fact that above the upper end (x) of the front stop (B) at least one upper front stop (5) is foreseen to be shifted between a first position in which it holds the front edge of the uppermost sheets of the pile (P) and a second position in which it enables the forward shift of the batch (E).

5. Machine according to claim 4, characterized by the upper front stop (5) being conceived as a unit tiltable from the so-called first to the so-called second position around an axle (50) itself fitted on the fixed front stop (B).

6. Machine according to claim 1, in which the separator (2) includes a first tooth (D1) destined to engage with the lowermost sheet (F˝) of the batch (E) to be built up, characterised by the fact that means (20, 22) conceived for shifting the separator (2) in such a way that the tooth (D1), when being engaged with one of the sheets of the pile (P), destined to become the lowermost sheet (F˝) of the batch (E), will move towards the pile (P) in a direction forming an angle of about 12° with regard to the front side of the pile (P).

7. Machine according to claim 6, characterized by the separator (2) comprising a contact surface (2a) provided with at least one auxiliary tooth (D2, D3) situated above the first tooth (D1).

8. Machine according to claim 7, characterized by the fact that the separator (2) is fitted on an auxiliary support (22) movable essentially vertically on a main support (20) which is shiftable, or tiltable, towards the pile (P) in such a way as to push the separator (2) against the latter pile with at least the first tooth (D1) being engaged with the batch (E) to be built up.

9. Machine according to claim 8, characterized by the fact that the operation of the separator (2) takes place jointly with a safety appliance (6) including a finger-shaped pin (6a) shiftable between a first position owing to which it is ahead of the fixed front stop (B), and a second position in which at least one pin bit (6a) is situated within the said free space (M) underneath the first tooth (D1) of the separator (2).

10. Machine according to claim 9, characterized by the safety pin (6) being tiltable around an axle (62) itself fitted on the auxiliary support (22).

11. Machine according to claim 5, characterized by the separator (2) being tiltable around an axle (22d) itself in parallelism with the front stop (B).

12. Machine according to claim 8, characterised by the separator (2) being tiltable between a first, fixed, position in parallelism with the front stop (B), which latter position is determined by the contact of the lower end of the separator (2) with the auxiliary support (22), and a second, variable, position determined by a spring (25) intercalated between the upper end of the separator (2) and the auxiliary support (22).

13. Machine according to claim 1, characterized by the fact that at least one pressing appliance (4) having the form of roller-shaped belt(s) or similar (4a) likely to be moved or not is foreseen above the pile (P) and shiftable between a first position distant from the uppermost sheet (F‴) of the batch (E), and a second position in which it is in pressure contact with the said uppermost sheet (F‴), means being also provided for adapting the position of the pressing appliance (4) to the height of the pile (P).

14. Machine according to claim 1, characterized by the rear jogger (1) having the shape of a rectangular plate (1) fitted so as to allow to be vertically adjustable on a first horizontal carriage (12) equipped with a jack (V1) for being shifted towards the pile (P), the said first carriage (12) being fitted on a second horizontal carriage (13) for the size setting as well as shiftable by means of a drive worm (14) itself driven by a motor (M1).
